Europäisches Patentamt

European Patent Office

Office européen des brevets

(19)

(11) Veröffentlichungsnummer: **0 439 655 A1**

## (12) EUROPÄISCHE PATENTANMELDUNG

(21) Anmeldenummer: **90101918.2**

(22) Anmeldetag: **31.01.90**

(51) Int. Cl.5: **G05B 19/405**

(43) Veröffentlichungstag der Anmeldung:
**07.08.91 Patentblatt 91/32**

(84) Benannte Vertragsstaaten:
**AT BE CH DE DK ES FR GB GR IT LI LU NL SE**

(71) Anmelder: **Siemens Aktiengesellschaft**
**Wittelsbacherplatz 2**
**W-8000 München 2(DE)**

(72) Erfinder: **Höhn, Georg, Dipl.-Math., Dipl.-Ing.**
**Gosberg 92**
**8551 Pinzberg(DE)**
Erfinder: **Adolphs, Peter**
**Tiergartenstrasse 9**
**5438 Westerburg(DE)**

(54) Robotersteuerungsverfahren zur Kollissionsvermeidung zwischen einem aufgabenorientiert programmierten Roboter und Objekten mit unterschiedlichem Mobilitätsgrad.

(57) Aufgabenorientiert programmierte Roboter sollen komplexe Befehle, wie z.B. "bringe Werkstück A von Tisch zu Förderband", ausführen können. Die nach Eingabe des Befehls vom Roboter selbsttätig durchzuführende Bahnplanung muß dabei Objekte (O1...O4), die sich im Arbeitsraum des Roboters befinden, kollisionsvermeidend umgehen. Die Robotersteuerung kann dazu auf eine Objekttabelle zugreifen, in der die verbotenen Objektbereiche (OB1...OB4) abgespeichert sind. Den Objektbereichen (OB1...OB4) wird eine Priorität (P1...P4) zugeordnet, die dem Mobilitätsgrad des korrespondierenden Objekts (O1...O4) entspricht. Bei einer Ortsveränderung eines Objekts (O1...O4) werden zunächst alle Objektbereiche (OB1...OB4), die die gleiche oder eine geringere Priorität (P1...P4) des Objekts (O1...O4) aufweisen aus der Objekttabelle gelöscht und dann wieder neu berechnet.

FIG 7

Xerox Copy Centre

EP 0 439 655 A1

# ROBOTERSTEUERUNGSVERFAHREN ZUR KOLLISIONSVERMEIDUNG ZWISCHEN EINEM AUFGABEN-ORIENTIERT PROGRAMMIERTEN ROBOTER UND OBJEKTEN MIT UNTERSCHIEDLICHEM MOBILITÄTS-GRAD

Unter aufgabenorientiert programmierten Robotern werden im Sinne dieser Anmeldung Robotersysteme verstanden, die so programmiert sind, das sie komplexe Befehle wie z.B. "bringe Werkstück A von Tisch 1 zu Förderband", selbständig ausführen können. Der Begriff "Roboter" ist dabei im weitesten Sinne zu verstehen. Er umfaßt alle für das Verfahren verwendbaren Handhabungsgeräte sowie - auch numerisch gesteuerte - Werkzeugmaschinen, selbst wenn diese auch nur eine Achse aufweisen, die aufgabenorientiert steuerbar ist.

Im Gegensatz zum sogenannten "Teachen", bei dem ein Roboter von einer Bedienperson zunächst auf einer vorgegebenen Bahn geführt wird, worauf die Robotersteuerung in die Lage versetzt wird, eine einmal geteachte Bahn selbsttätig zu wiederholen, werden der Robotersteuerung eines aufgabenorientiert programmierten Roboters einmalig prinzipielle Eigenschaften des Roboters und des Arbeitsraumes, der dem Roboter in Abhängigkeit von seinem geometrischen Aufbau zur Verfügung steht, mitgeteilt. Diese Grundeigenschaften können in die Robotersteuerung bereits vom Hersteller implementiert werden. Am tatsächlichen Einsatzort eines aufgabenorientiert programmierten Roboters müssen dann die prinzipiellen Eigenschaften noch an die tatsächlich vorgefundenen Umweltbedingungen angepaßt werden. Das bedeutet beispielsweise, daß der Robotersteuerung alle Objekte, die sich im Arbeitsraum des Roboters befinden, mitgeteilt werden müssen, damit diese bei einer jeweiligen Roboterbewegung berücksichtigt werden können, so daß es nicht zu einer Kollision mit den Objekten und dem Roboter kommt.

Aufgrund der prinzipiellen Eigenschaften und der aktuell vorgefundenen Umweltbedingungen bzw. der aktuell vorgefundenen Objekte im Arbeitsraum des Roboters kann die Robotersteuerung komplexe Befehle, wie beispielsweise den eingangs erwähnten Befehl - "bringe Werkstück A von Tisch 1 zu Förderband" - ausführen und, entweder im off-line-Betrieb vor der Ausführung einer Bewegung oder on-line, alle dazwischenliegenden Hindernisse berücksichtigen und umgehen, so daß es zu keinen Kollisionen mit dem Roboter und Objekten kommt.

Bisherige Verfahren zur Steuerung von aufgabenorientiert programmierten Robotern benötigen - insbesondere dann, wenn sich die aktuellen Objekte im Arbeitsraum des Roboters auch noch bewegen -, so lange Rechenzeiten, daß eine on-line-Anwendung bisher noch nicht möglich war.

Aufgabe der Erfindung ist es deshalb ein Verfahren zur kollisionsvermeidenden Steuerung von aufgabenorientiert programmierten Robotern zu schaffen, bei dem die Rechenzeit für eine Bahnplanung des Roboters reduziert wird.

Diese Aufgabe wird durch ein Robotersteuerungsverfahren zur Kollisionsvermeidung zwischen einem aufgabenorientiert programmierten Roboter und Objekten mit unterschiedlichem Mobilitätsgrad mit folgenden Merkmalen gelöst:

a) Im Arbeitsraum des Roboters werden Objektbereiche die vom Roboter aufgrund von möglichen Objekten im Arbeitsraum nicht erreichbar sind, bestimmt,

b) jedem Objekt wird eine Priorität zugeordnet, die seinem Mobilitätsgrad entspricht,

c) jedem Objektbereich wird die Priorität des Objektes zugeordnet, aufgrund dessen er ermittelt wurde,

d) die Objektbereiche werden prioritätsbezogen in einer Objekttabelle gespeichert,

e) wenn sich ein Objekt im Arbeitsraum des Roboters von seinem Ort entfernt, werden alle Objektbereiche, die die gleiche oder eine geringere Priorität als das Objekt aufweisen, aus der Objekttabelle gelöscht, worauf

f) alle verbleibenden Objekte mit gleicher oder geringerer Priorität wieder neu in der Objekttabelle gespeichert werden.

Eine vorteilhafte Ausbildung des Verfahrens ist dadurch gekennzeichnet, daß der Schnittmenge von sich überschneidenden Objektbereichen die Priorität zugeordnet wird, die dem geringsten Mobilitätsgrad der Gruppe von Objekten entspricht, aus dem die Schnittmenge des Objektbereichs resultierte. Dadurch wird beim häufig stattfindenden Löschen von Objekten mit hohem Mobilitätsgrad nur relativ wenig Rechenzeit benötigt.

Durch eine Gruppeneinteilung von Objekten läßt sich die Anzahl der zu vergebenden Prioritäten reduzieren und damit ebenfalls die Rechenzeit verkürzen.

Im on-line-Betrieb braucht die Robotersteuerung nur jeweils die Objekte berücksichtigen, die sich auch tatsächlich im Arbeitsraum des Roboters befinden. Die zu diesen aktuellen Objekten korrespondierenden Objektbereiche können deshalb in einer aktuellen Objekttabelle gespeichert werden, so daß die Robotersteuerung bei der Bahnberechnung lediglich auf die aktuelle Objekttabelle zugreifen braucht.

In dem Aufsatz "Transformation of Obstacles into Configuration Space by using a special Look-Up-Table for Collision-Free On-Line Path-Planning", von P.Adolphs und G.Höhn, der zur ICCON-Konferenz, die im April 1989 in Jerusalem stattfand, veröffentlicht wurde, ist ein Verfahren vorgeschlagen worden, mit dem die Rechenzeiten von aufgabenorientiert programmierten Robotern reduziert werden können. Dabei wird der Arbeitsraum des Roboters bezüglich eines Zylinderkoordinatensystems in Arbeitsraum-Elementarzellen, im folgenden A-Elementarzellen, unterteilt. Ein Zylinderkoordinatensystem bietet sich zu diesem Zweck für die meisten Roboter an, ist aber nicht zwingend erforderlich. Entscheidendes Kriterium bei der Wahl des Koordinatensystems ist, daß für die Einteilung des Arbeitsraums in A-Elementarzellen aufgrund von Symmetriebedingungen des Roboters möglichst einfache Algorithmen verwendet werden können.

Alle A-Elementarzellen die vom Roboter durch mindestens eine Gelenkkonfiguration erreichbar sind, bilden als Konfigurationsraum-Elementarzellen, im folgenden K-Elementarzellen, den Konfigurationsraum des Roboters. Die Gelenkkonfiguration berücksichtigt dabei, daß der Roboter einen Raumpunkt oder eine A-Elementarzelle des Arbeitsraums durch verschiedene Gelenkwinkelstellungen erreichen kann. Der Konfigurationsraum hat damit zwar die gleiche räumliche Ausdehnung wie der Arbeitsraum, weist aber im Regelfall deutlich mehr K-Elementarzellen auf.

Unter der Annahme, daß eine jeweilige A-Elementarzelle ein elementares Objekt für den Roboter darstellt, werden alle K-Elementarzellen, die bedingt durch das elementare Objekt vom Roboter nicht erreichbar sind, in einer allgemeinen Objekttabelle gespeichert. Elementares Objekt bedeutet hier soviel wie ein materielles Hindernis in der Größe einer A-Elementarzelle. Würde sich ein solches elementares Objekt im Arbeitsraum des Roboters befinden, so kann es sein, daß der Roboter einen bestimmten Bereich, der sich vom Roboter aus gesehen hinter diesem Objekt befindet, nicht mehr erreichen kann, weil das elementare Objekt für eine seiner Achsen oder Extremitäten ein Hindernis darstellt. Ein tatsächliches oder aktuelles Objekt kann dann durch eine Anzahl von A-Elementarzellen beschrieben werden, so daß über die Objekttabelle alle K-Elementarzellen ermittelt werden können, die der Roboter nicht erreichen bzw. bei einer vorzunehmenden Bahnplanung vermeiden muß.

Am Einsatzort des Roboters werden dann alle aktuellen Objekte im Arbeitsraum des Roboters durch A-Elementarzellen beschrieben und die dazugehörigen K-Elementarzellen aus der allgemeinen Objekttabelle ermittelt und in einer aktuellen Objekttabelle als aktuelle K-Elementarzellen gespeichert.

Erfindungsgemäß läßt sich das Verfahren auch dann anwenden, wenn sich örtlich veränderbare Objekte im Arbeitsraum des Roboters befinden. Ist ein Objekt so mobil, daß es sich im Arbeitsraum des Roboters wesentlich verändern oder sogar den Arbeitsraum des Roboters verlassen kann, so sind natürlich die einmal aus diesem aktuellen Objekt ermittelten K-Elementarzellen hinfällig geworden und müssen aus der aktuellen Objekttabelle gelöscht werden, wogegen die neu von dem Objekt eingenommenen Bereiche wieder in K-Elementarzellenbereiche transformiert werden müssen. Dies läßt sich dadurch erreichen, daß

- jedem aktuellen objekt eine Priorität zugeordnet wird, die seinem Mobilitätsgrad entspricht,
- jede aktuelle K-Elementarzelle die Priorität des Objekts erhält, aus dem sie ermittelt wurde,
- immer wenn sich ein aktuelles Objekt von seinem Ort entfernt, alle aktuellen K-Elementarzellen, die die gleiche oder eine geringere Priorität aufweisen, aus der aktuellen Objekttabelle gelöscht werden, wobei
- alle verbleibenden Objekte mit gleicher oder geringerer Priorität wieder in der aktuellen Objekttabelle gespeichert werden.

Dabei ist es auch bei diesem Verfahren aus den bereits beschriebenen Gründen vorteilhaft, wenn einer aktuellen K-Elementarzelle, die aus mindestens zwei aktuellen Objekten unterschiedlicher Priorität ermittelt wurde, die Priorität des aktuellen Objektes mit dem geringsten Mobilitätsgrad zugeordnet wird.

Ein vorteilhaftes Verfahren zur Berücksichtigung der Mobilität der aktuellen Objekte ist dadurch gekennzeichnet, daß die aktuellen Objekte nach ihrer Mobilität gruppiert werden, wobei einer jeweiligen Gruppe von aktuellen Objekten eine Priorität zugeordnet wird.

Bei der Gruppierung der aktuellen Objekte können beispielsweise folgende Objekte zu einer Gruppe zusammengefaßt werden

- statische, festmontierte Objekte, wie z.B. Maschinen und Anlagenteile,
- statische Objekte, die ihren Standplatz ändern können z.B. Paletten mit Werkstücken,
- bewegliche Objekte, deren Bewegungen von vornherein bekannt sind z.B. Werkstücke auf einem Fließband,
- bewegliche Objekte, deren Bewegungen unbekannt sind wie z.B. Personen, die sich im Arbeitsraum des Roboters aufhalten.

Eine weitere Reduzierung der Rechenzeit läßt sich vorteilhaft dadurch erreichen, daß ein zu einem jeweiligen Robotertyp passendes Koordinatensystem so gewählt wird, daß unter Ausnutzung von Symmetrieeigenschaften des Koordinatensystems die K-Elementarzellen zu K-Elementarzellenbereichen zusammenfaßbar sind.

Ein Ausführungsbeispiel der Erfindung wird anhand der Zeichnung beschrieben. Dabei zeigen:

FIG 1
einen Roboter mit Bezugskoordinatensystem,

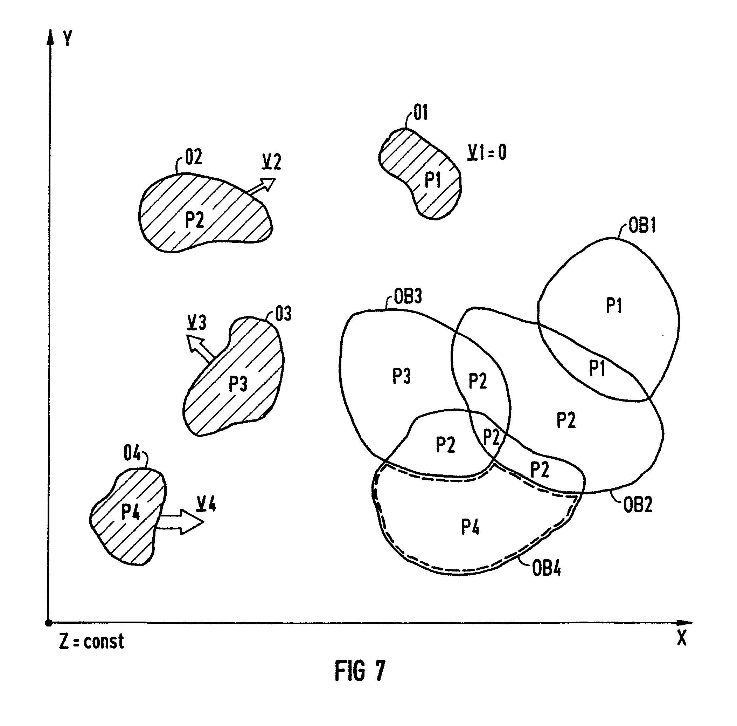

FIG 2
bis FIG 5 schematische Darstellungen verschiedener Gelenkstellungen eines Roboters,

FIG 6
eine schematische Darstellung eines Roboters, eines Objektes und eines Objektbereiches,

FIG 7
Objekte und zugehörige Objektbereiche im Arbeitsraum eines Roboters,

FIG 8
eine Elementarzelle,

FIG 9
die Beschreibung eines aktuellen Objekts durch Arbeitsraumelementarzellen,

FIG 10 und FIG 11
eine Elementarzelle im Winkelbereich von Roboterachsen,

FIG 12
einen Elementarzellenflächenbereich,

FIG 13
die Projektion eines Elementarzellenbereichs auf die X-, Y-Ebene,

FIG 14
einen Elementarzellenrandbereich,

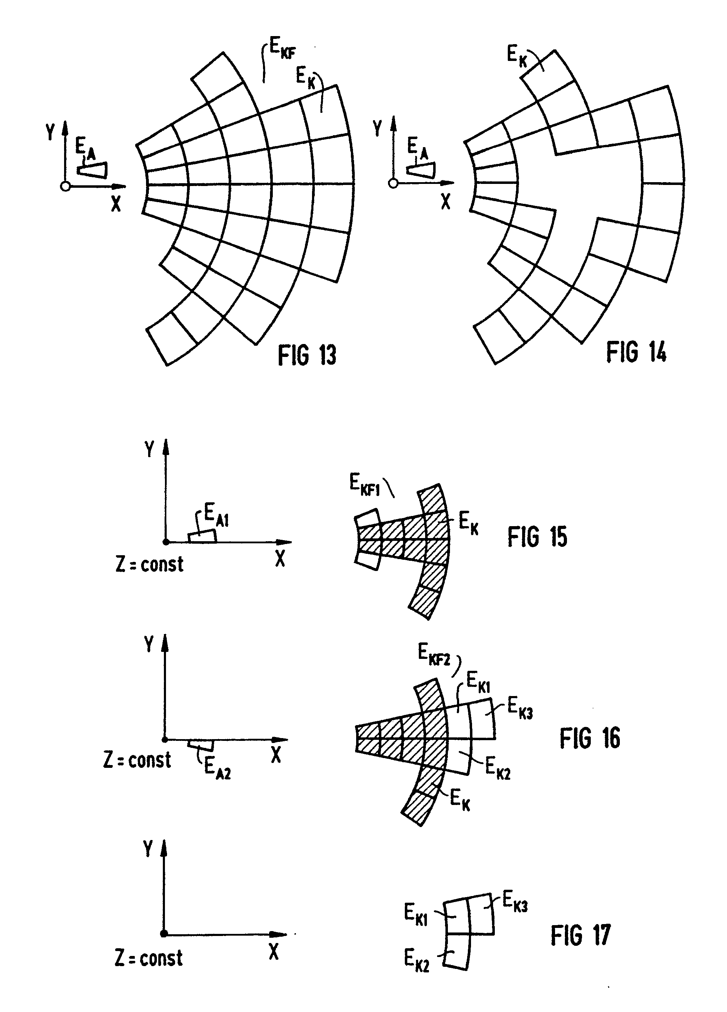

FIG 15
bis FIG 17 die Entstehung einer Differenzobjekttabelle.

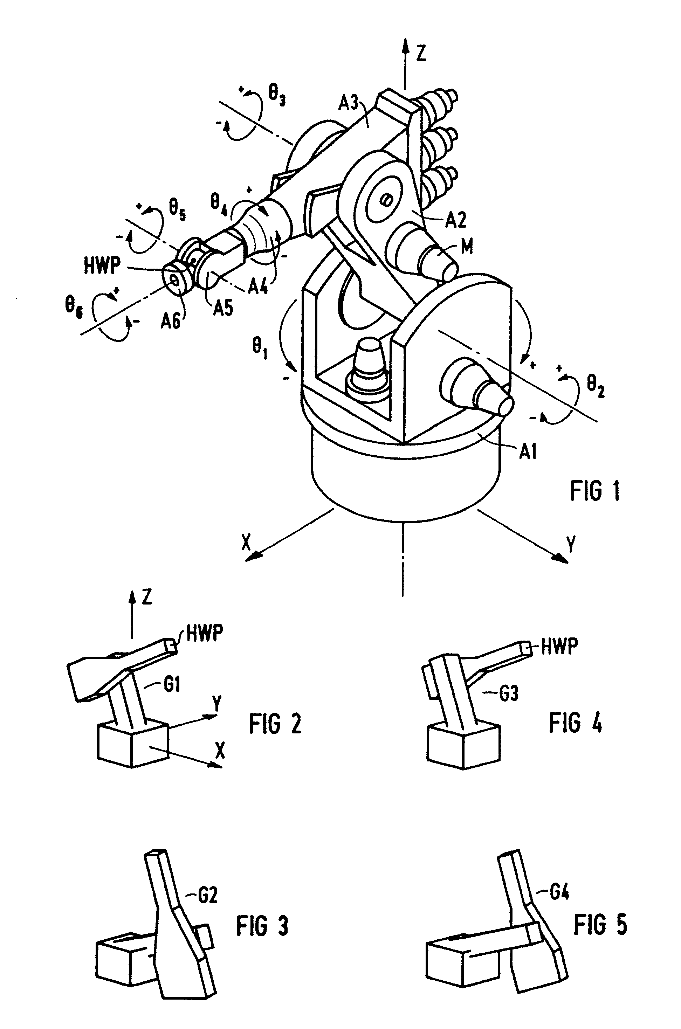

FIG 1 zeigt einen sechsachsigen Roboter dessen Achsen A1...A6 über die Gelenkwinkel $\theta 1$ bis $\theta 6$ mittels der Motoren M einstellbar sind. Dem Roboter ist ein rechtwinkliges kartesisches Koordinatensystem mit den Koordinaten X, Y und Z zugeordnet. Durch die Symmetrie des hier gezeigten Roboters bezüglich der Z-Achse läßt sich der Arbeitsraum des Roboters vorteilhaft in Zylinderkoordinaten beschreiben. Eine Beschreibung des Arbeitsraums in Zylinderkoordinaten ist jedoch nicht notwendige Voraussetzung zur Durchführung des Verfahrens. Für konstruktiv anders aufgebaute Roboter könnte eine Beschreibung des Arbeitsraumes in einem anderen Koordinatensystem besser geeignet sein.

Zur Vereinfachung des Verfahrens ist es vorteilhaft, die komplexe Form des Roboters durch geeignete Hüllkörper (der Übersichtlichkeit halber nicht dargestellt) zu beschreiben. Beispielsweise können die drei Hauptgelenke durch eine beliebig zu spezifizierende Anzahl von Prismen die in Gelenkreichtung verlaufen, approximiert werden. Der gesamte Arbeitsraum der drei Handachsen A4...A6 kann durch eine umschließende Hüllkugel (ebenfalls nicht dargestellt) beschrieben werden. Damit ist zugleich festgelegt, daß sich die Gestalt des Robotermodells lediglich in Abhängigkeit der Achsen A1...A3 verändert. Der Schnittpunkt der drei Handachsen A4...A6 wird im folgenden mit Handwurzelpunkt HWP bezeichnet. Der Handwurzelpunkt HWP kann also durch Verstellen der Gelenkwinkel $\theta 1$...$\theta 3$ im Arbeitsraum des Roboters positioniert werden.

Die Figuren 2 bis 5 zeigen einen Roboter dessen komplexe geometrische Form auf die wesentlichen Elemente reduziert ist. Es ist erkennbar, daß der Roboter bzw. der Handwurzelpunkt HWP des Roboters durch maximal vier verschiedene Gelenkstellungen G1 ...G4 auf jeweils den gleichen Punkt bzw. Bereich bezüglich des Koordinatensystems positioniert werden kann.

Befindet sich im Arbeitsraum des Roboters ein Objekt, so kann der Roboter in Abhängigkeit von seinem konstruktiven Aufbau bestimmte Bereiche seines Arbeitsraumes nicht mehr erreichen, da er durch dieses Objekt daran gehindert wird.

FIG 6 zeigt eine schematische Darstellung eines Roboters, in dessen Arbeitsraum sich ein Objekt O befindet, sowie einen Objektbereich OB, der bedingt durch das Objekt O vom Roboter nicht mehr erreichbar ist. Das schraffiert gezeichnete Objekt O kann dabei beliebig geformt sein. Der Objektbereich OB ist der gesamte Raum, den der Roboter bedingt durch das Objekt O nicht mehr erreichen kann, also der Bereich, der gewissermaßen im Schattenbereich des Objekts O in Bezug auf den Roboter liegt.

Soll der Roboter sich nun selbsttätig im Arbeitsraum bewegen indem er beispielsweise ein Werkstück von einem Tisch zu einem Förderband bringen soll, so muß er natürlich alle Objekte O die sich im Arbeitsraum befinden, kennen, um sich eine Bewegungsbahn berechnen zu können, bei der er nicht an ein Objekt O stößt. Der Robotersteuerung werden dazu alle Objektbereiche OB, die im Abschattungsbereich eines Objekts O liegen, mitgeteilt. Bei der Bahnplanung kann dann die Robotersteuerung auf die Objekttabelle zugreifen und erhält damit Kenntnis von allen Objektbereichen OB, die bei der Ausführung der Roboterbewegung vermieden werden müssen, damit der Roboter nicht mit irgendeinem mechanischen Teil an ein Objekt O anstößt.

Wenn sich nun Objekte von ihrem bisherigen Ort wegbewegen oder wegbewegt werden, so müssen sie aus der Objekttabelle entfernt werden. Dies ist sowohl im Hinblick auf die Einbeziehung von statischen Objekten, die ihren Standplatz ändern können, als auch von beweglichen Objekten notwendig. In beiden Fällen muß die Objekttabelle schnell an Änderungen in der Umwelt des Roboters angepaßt werden.

Dabei ist eine eindeutige Zuordnung der Objektbereiche zu den korrespondierenden Objekten im Arbeitsraum wichtig. Eine spezielle Kennung im Konfigurationsraum, die genau beschreibt, welche aktuellen Objekte zu den K-Elementarzellen $E_K$ geführt haben, ist aus Speicherplatzgründen kaum zu realisieren. Daher wird hier ein Weg über die Vergabe von Prioritäten an alle Objekte vorgeschlagen, wobei die Prioritäten Aufschluß über den Mobilitätsgrad der Objekte geben. Beispielsweise kann die höchste Priorität statischen, fest montierten Objekten und die niedrigste Priorität den am schnellsten beweglichen Objekten zugeordnet werden.

FIG 7 zeigt die Projektion von beliebigen Objekten oder Objektgruppen O1...O4 auf eine X-,Y-Ebene bei Z = const. und die dazugehörigen Objektbereiche OB1...OB4. Die gestrichelt gezeichneten Objekte oder Objektgruppen O1...O4 weisen einen unterschiedlichen Mobilitätsgrad auf, der durch die Geschwindigkeitsvektoren V2, V3, V4 dargestellt ist. Die unterschiedliche Dicke der Pfeile gibt dabei den Mobilitätsgrad eines Objektes O1...O4 an, wobei das Objekt O4 mit dem breitesten Geschwindigkeitsvektor V4 am mobilsten ist und das Objekt O1 ein statisches, also ein ortsunveränderliches Objekt mit der Geschwindigkeit V1 = O, darstellt.

Jedem Objekt O1...O4 ist entsprechend seiner Mobilität eine Priorität P1...P4 zugeordnet, wobei P1 die höchste Priorität und P4 die niedrigste Priorität bedeuten. Dem zu einem jeweiligen Objekt O1...O4 gehörendem Objektbereich OB1...OB4 ist die Priorität P1...P4 des korrespondierenden Objekts O1...O4 zugeordnet.

Die Priorität P1...P4 die zu einem Objektbereich OB1...OB4 gehört, wird zusammen mit diesem Objektbereich OB1...OB4 in der Objekttabelle gespeichert. Bei der Gruppierung von Objekten O1 ...O4 mit gleichem oder ähnlichem Mobilitätsgrad kann eine Zuordnung eines Objektbereiches OB1...OB4 zu einem Objekt O1... O4 anhand der Objekttabelle nicht mehr vorgenommen werden, weil die Zuordnung nicht umkehrbar ist. Damit ist die Kenntnis der Priorität P1...P4 aus der Objekttabelle die einzige Möglichkeit, die Mobilität der Objekte O1...O4 zu berücksichtigen.

Verändert beispielsweise das Objekt O4 seinen Ort, so wird sich zu diesem Objekt O4 ein neuer Objektbereich ergeben. Die ser neue Objektbereich wird an einer anderen Stelle im Raum zu lokalisieren sein und im Regelfall auch andere Abmessungen aufweisen, sofern das Objekt O4 nicht überhaupt den Arbeitsraum des Roboters verläßt. Deshalb muß bei einer Ortsveränderung des Objekts O4 der zugehörige Objektbereich OB4 aus der Objekttabelle entfernt werden. Das wird dadurch gelöst, daß alle Speicherbereiche in der Objekttabelle, die die Priorität P4 aufweisen, gelöscht werden. Solange sich das Objekt O4 im Arbeitsraum des Roboters bewegt, muß der entsprechende Objektbereich OB4 immer wieder gelöscht und neu berechnet werden.

In FIG 7 ist weiter zu erkennen, daß sich die Objektbereiche OB1...OB4 teilweise überschneiden. Der erste Objektbereich OB1 überschneidet sich mit dem zweiten Objektbereich OB2, der zweite Objektbereich OB2 überschneidet sich mit dem Objektbereich OB3 und dem Objektbereich OB4 und der dritte Objektbereich OB3 überschneidet sich mit dem vierten Objektbereich OB4. Den Schnittmengen der jeweiligen Objektbereiche OB1...OB4 wird nun jeweils die höchste Priorität eines an der Schnittmenge beteiligten Objektbereiches OB1...OB4 zugeordnet. Die Schnittmenge des ersten Objektbereichs mit dem zweiten Objektbereich OB2 erhält damit die Priorität P1, die Schnittmenge des zweiten mit dem vierten und dem dritten Objektbereich OB2, OB4, OB3 erhält die Priorität P2 des zweiten Objektbereichs.

Verändert ein Objekt, oder eine Objektgruppe O1...O4 seinen Ort, so werden aus der Objekttabelle nur diejenigen Speicherbereiche gelöscht, die die gleiche oder eine geringere Priorität des sich veränderten Objektes, oder der Objektgruppe O1...O4 aufweisen (Der Einfachheit halber wird im folgenden nur noch von Objekten gesprochen, auch wenn Objektgruppen gemeint sein können). Würde sich also beispielsweise das Objekt O2 mit der Priorität P2 verändern, so würden alle Speicherbereiche aus der Objekttabelle mit der Priorität P2, P3, P4 zunächst gelöscht werden, um dann wieder neu ermittelt zu werden. Da die Schnittmenge des ersten Objektbereichs OB1 mit dem zweiten Objektbereich OB2 die Priorität P1 aufweist, bleibt der Objektbereich OB1 in der Objekttabelle gänzlich erhalten und muß nicht neu berechnet werden.

Im geschilderten Beispiel ist noch ein relativ großer Rechenaufwand nötig, da alle Speicherbereiche der Priorität P2, P3 und P4 aus der Objekttabelle gelöscht und neu berechnet werden müssen. Da es sich bei dem Objekt O2, das diesen Aufwand bedingte, jedoch um ein Objekt mit relativ geringem Mobilitätsgrad handelt, ist eine Bewegung dieses Objekts nicht allzu häufig zu erwarten oder die Bewegung weist eine geringe Geschwindigkeit V2 auf. Deshalb werden die dafür notwendigen Berechnungen nur selten vorgenommen werden müssen.

Bewegt sich jedoch das Objekt O4, das, wie an der Priorität P4 oder am dicken Geschwindigkeitspfeil V4 zu erkennen ist, einen hohen Mobilitätsgrad aufweist, so sind nur die Speicherbereiche mit der Priorität P4 aus der Objekttabelle zu löschen. Wie aus der gestrichelt gezeichneten Linie des Objektbereichs OB4 zu erkennen ist, ist dafür ein relativ geringer Speicherplatz aus der Objekttabelle zu löschen. Im Resultat läßt sich also festhalten, daß für Objekte mit hohem Mobilitätsgrad, also schnell bewegliche Objekte oder Objekte die sich sehr häufig bewegen ein geringerer Rechenaufwand durchgeführt werden muß, als für Objekte mit höherem Prioritätsgrad.

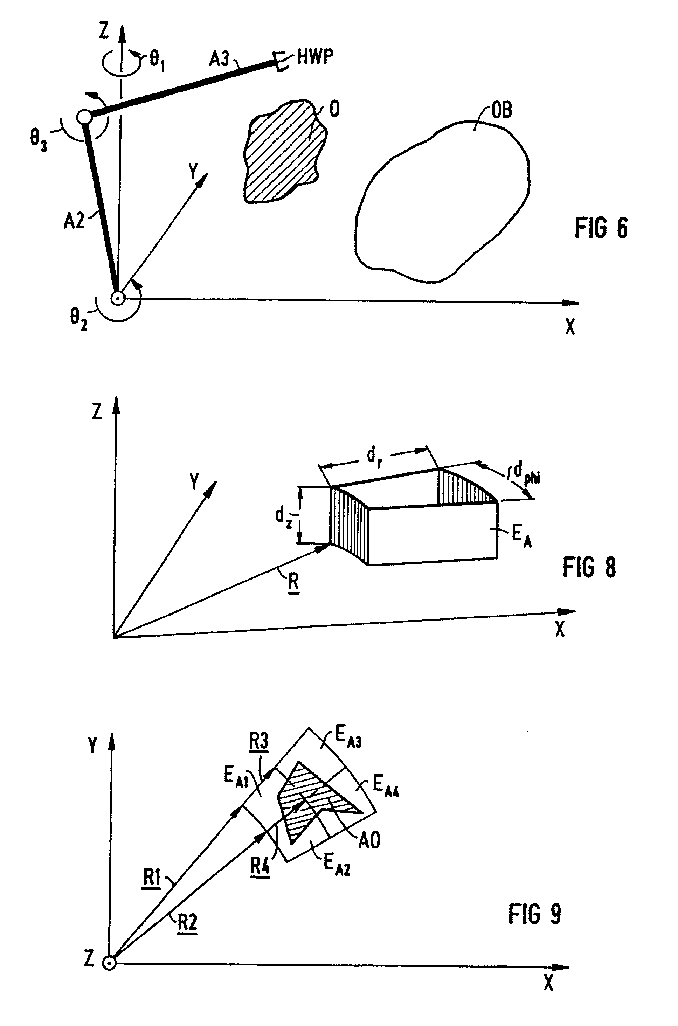

Zur Feststellung der Abschattungsbereiche, also der Objektbereiche OB1...OB4 die durch ein Objekt O1...O4 für den Roboter nicht erreichbar sind, läßt sich der Arbeitsraum in Elementarzellen zerlegen und zu jeder Elementarzelle der jeweilige Objektbereich OB1...OB4 bestimmen. Ein solches Verfahren wird im folgenden anhand der Figuren 8 ff beschrieben.

FIG 8 zeigt eine A-Elementarzelle $E_A$ in die der Arbeitsraum des Roboters eingeteilt wird. Eine jeweilige A-Elementarzelle $E_A$ wird durch den Vektor $\overline{R}$ in Zylinderkoordinaten (r,phi,z) und durch ihre Abmessungen $d_r$, $d_{phi}$, $d_z$ beschrieben. Der gesamte Arbeitsraum des Roboters stellt sich damit als eine Summe von A-Elementarzellen $E_A$ dar.

Wie anhand der Figuren 2 bis 5 bereits beschrieben wurde, kann ein Bereich im Arbeitsraum des Roboters bei der hier betrachteten elementaren Roboterkonfiguration maximal durch vier Gelenkstellungen G1 bis G4, also durch vier Konfigurationen des Roboters erreicht werden. Die A-Elementarzelle $E_A$ könnte also vom Roboter beispielsweise durch die vier Gelenkkonfigurationen G1 bis G4 erreicht werden. Alle Elementarzellen die durch eine bestimmte Gelenkkonfiguration G1...G4 des Roboters erreichbar sind, werden deshalb als Konfigurationsraum-Elementarzellen, im folgenden K-Elementarzellen $E_K$ beschrieben. Eine A-Elementarzelle $E_A$ die mit den Koordinaten (r,phi,z) adressiert werden kann, wird demnach im Konfigurationsraum K über die Koordinaten (r,phi,z,G1),- (r,phi,z,G2),(r,phi,z,G3),(r,phi,z,G4) angesprochen.

Zum Verständnis des Konfigurationsraumes kann man von der Vorstellung ausgehen, daß jede A-Elementarzelle $E_A$ ein ortsfestes materielles Hindernis für den Roboter darstellt. Bei einer auszuführenden Roboterbewegung darf der Roboter mit keiner seiner Extremitäten, also weder mit einer Achse A1...A6 noch mit einem Motor M oder einem sonstigen zur Robotergeometrie gehörenden Element, an die A-Elementarzelle $E_A$ stoßen. Damit ergibt sich zu jeder A-Elementarzelle $E_A$ eine verschieden große Anzahl von K-Elementarzellen $E_K$, die der Roboter wenigstens durch eine Gelenkstellung G1 bis G4 nicht erreichen kann, da er durch die A-Elementarzelle $E_A$ behindert ist. Diese, durch eine jeweilige A-Elementarzelle $E_A$ nicht erreichbaren K-Elementarzellen bilden den verbotenen Teil des Konfigurationsraum des Roboters.

Zur steuerungstechnischen Erfassung des Konfigurationsraums werden alle K-Elementarzellen $E_K$ in einem Speichermedium in Form einer allgemeinen Objekttabelle gespeichert. Die Aufteilung des Arbeitsraums eines jeweiligen Roboters in A-Elementarzellen $E_A$ und die Bildung der allgemeinen Objekttabelle kann dabei bereits vom Hersteller, also "off-line" vorgenommen werden, da sie lediglich abhängig ist von der speziellen Robotergeometrie.

Am Einsatzort des Roboters werden dann die tatsächlich vorgefundenen Umweltbedingungen berücksichtigt, d.h. alle aktuellen Objekte die sich am Einsatzort des Roboters in dessen Arbeitsraum befinden - wie beispielsweise ein Förderband oder bewegliche Teile auf dem Förderband, ein Arbeitstisch und Personen im Arbeitsraum des Roboters -, können aus A-Elementarzellen $E_A$ zusammengesetzt gedacht werden.

FIG 9 zeigt wie ein aktuelles Objekt AO durch A-Elementarzellen $E_{A1}...E_{A4}$ beschrieben werden kann. Die A-Elementarzellen $E_{A1}...E_{A4}$ sind der Einfachheit halber auf eine X-,Y-Ebene bei Z = const. projeziert. Ihre Lage wird durch die Vektoren R1...R4 beschrieben. Zu jeder der A-Elementarzellen $\overline{E}_{A1}...E_{A4}$ könnte nun die Robotersteuerung für eine auszuführende Bewegung die K-Elementarzellen $E_K$ ermitteln und diese bei der Bewegung umgehen. Damit ist gewährleistet, daß bei der Roboterbewegung kein Teil des Roboters an ein aktuelles Hindernis stößt, da durch die Vermeidung der K-Elementarzellen $E_K$ automatisch die aktuellen Objekte AO vom Roboter umgangen werden.

Die allgemeine Objekttabelle hat jedoch einen sehr hohen Speicherplatzbedarf, so daß diese allgemeine Methode auf heutigen Rechnern nur sehr zeitaufwendig zu realisieren ist. Die Ausnutzung spezifischer Eigenschaften der allgemeinen Objekttabelle führt jedoch zu einer Reduzierung des Speicherplatzbedarfs und stellt somit ein realisierbares Konzept dar.

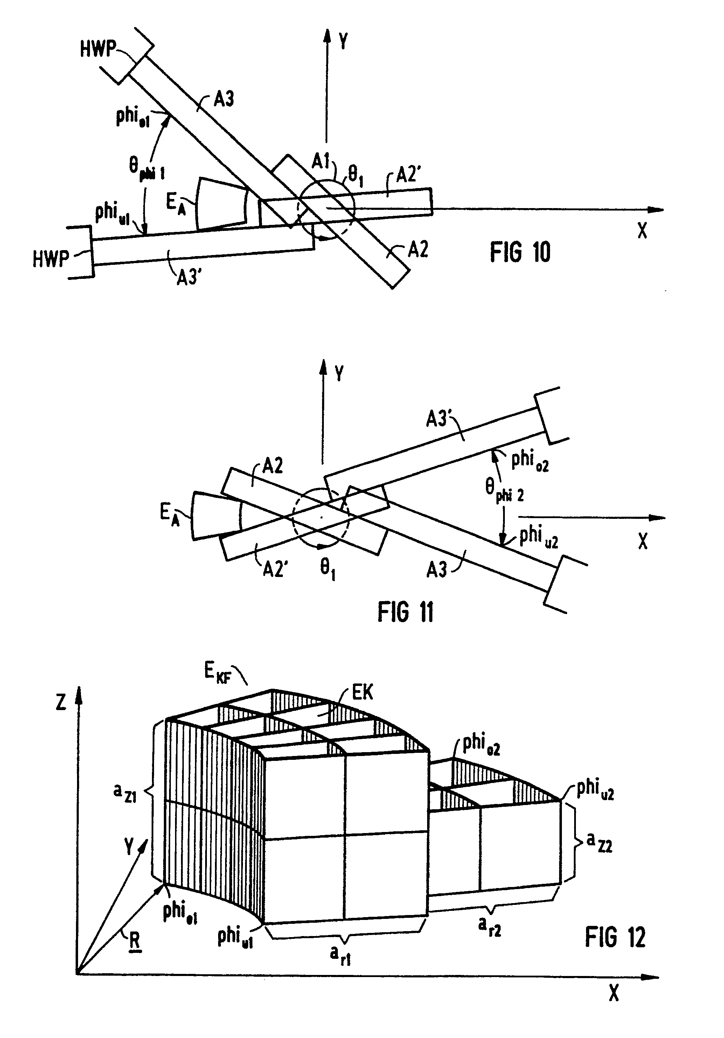

Die Figuren 9 und 10 zeigen eine erste Möglichkeit wie durch Ausnutzung der Arbeitsraumsymmetrie eine Reduzierung der allgemeinen Objekttabelle vorgenommen werden kann. Dabei handelt es sich um eine "phi-Intervall"-Beschreibung des Arbeitsraums des Roboters. Bei dieser Art der Darstellung macht man sich roboterspezifische Eigenschaften zunutze. Hält man die Achsen A2 und A3 auf konstanten Werten und verändert den Winkel $\theta_1$ der Achse A1, so daß der Handwurzelpunkt HWP bei Z = const. eine Drehung um den Winkel phi beschreibt, so können die Bereiche von $\theta_1$ bzw. phi in denen eine Kollision zwischen den Roboterachsen A2 bzw.A3 und der Elementarzelle $E_A$ auftreten würde, durch eine diskrete Anzahl von Winkelintervallen $\theta_{phi1},\theta_{phi2}$ beschrieben werden.

Aus FIG 10 ist ersichtlich, daß die A-Elementarzelle $E_A$ die Roboterachse A3 in einem Bereich $\theta_{phi1}$ behindert. Wie in FIG 10 zu sehen ist, behindert die gleiche Elementarzelle $E_A$ die Achse A2 in einem weiteren Winkelbereich $\theta_{phi2}$. Die Anzahl der

Winkelintervalle $\theta_{phi1}$, $\theta_{phi2}$ hängt dabei vom konstruktiven Aufbau des Roboters ab. Bei dem in den Figuren 9 und 10 zugrundegelegten Robotertyp sowie für die meisten Roboter reichen jedoch jeweils zwei Winkelbereiche $\theta_{phi1}$, $\theta_{phi2}$ aus.

In der allgemeinen Objekttabelle müssen die durch die A-Elementarzelle $E_A$ nicht erreichbaren K-Elementarzellen $E_K$ nicht einzeln abgespeichert werden, sondern können als Kollisionsintervallbereiche mit den Intervallgrenzen $\theta_{phi}$ = |phi$_u$,phi$_o$| abgespeichert werden. Die mathematische Beschreibung dazu lautet:

$$((r,|phi_u,phi_o|,z,G)|i = 1,...,m_j) = f ((r,z)_j)$$

wobei |phi$_u$, phi$_o$| die Intervallgrenzen für einen jeweiligen Kollistionsintervall-Bereich angeben.

In FIG 12 ist nun dargestellt, wie sich der Speicherplatz für die allgemeine Objekttabelle so weitgehend reduzieren läßt, daß eine Anwendung mit heutigen Rechnern ermöglicht wird. Dabei werden die Kollisionsintervall-Bereiche mit gleichem Intervallbereich |Phi$_u$,Phi$_o$| zusammengefaßt und in der Form

$$(r,|phi_u,phi_o|z,a_r,a_z,G)$$

beschrieben. Die Koordinaten r, z des Vektors $\overline{R}$ geben dabei den Ort der Elementarzelle $E_K$ in der linken unteren Ecke des Flächenbererichs an und durch die Abstände a$_r$, a$_z$ wird die Ausdehung eines jeweiligen Flächenbereichs beschrieben.

Aus den Figuren 13 und 14 läßt sich eine weitere Möglichkeit zur Reduzierung der allgemeinen Objekttabelle entnehmen. In FIG 12 ist die Projektion eines Flächenbereiches $E_{KF}$ der aus einer A-Elementarzelle $E_A$ resultiert, auf die X-,Y-Ebene gezeigt. Da es einem Roboter nicht möglich ist, mit seinem Handwurzelpunkt auch nur eine der K-Elementarzellen $E_K$ des Elementarzellenflächenbereichs $E_{KF}$ zu erreichen, genügt es, in der allgemeinen Objekttabelle nur die den Gesamtbereich begrenzenden K-Elementarzellen $E_K$ zu beschreiben bzw. abzuspeichern, wie dies in FIG 13 veranschaulicht ist.

Bei genauerer Betrachtung des Inhalts der allgemeinen Objekttabelle erkennt man, daß die für den Roboter verbotenen Bereiche, die zu sehr dicht beeinanderliegenden A-Elementarzellen $E_A$ korrespondieren, die sehr dicht, nahezu identisch sind. Dies ermöglicht eine weitere Minimierung der Objekttabelle.

In FIG 15 ist - ebenfalls zur Vereinfachung der Darstellung - in einer X-,Y-Ebene bei Z = konstant eine A-Elementarzelle $E_{A1}$ und ein dazu korrespondierender K-Elementarzellenbereich $E_{KF1}$ gezeigt. FIG 16 zeigt in der gleichen X-, Y-Ebene eine zweite A-Elementarzelle $E_{A2}$ und den dazu korrespondierenden K-Elementarzellenbereich $E_{KF2}$. Ein Vergleich der K-Elementarzellenbereiche $E_{KF1/2}$ der Figuren 15 und 16 zeigt, daß die schraffierten K-Elementarzellen $E_K$ der beiden Bereiche $E_{KF1}$,$E_{KF2}$ identisch sind. Lediglich die K-Elementarzellen $E_{K1}$...$E_{K3}$, die zur A-Elementarzelle $E_{A2}$, FIG 15 korrespondieren, sind noch nicht im K-Elementarzellenbereich $E_{KF1}$ enthalten.

In FIG 17 sind die nicht im K-Elementarzellenbereich $E_{KF1}$ enthaltenen K-Elementarzellen $E_{K1}$...$E_{K3}$ dargestellt. Diese K-Elementarzellen $E_{K1}$...$E_{K3}$ werden in einer Differenz-Objekttabelle gespeichert. Bei der Transformation eines Objekts in den Konfigurationsraum wird also das Objekt durch einzelne A-Elementarzellen $E_A$ beschrieben und es werden nur zu einer A-Elementarzelle $E_A$ die K-Elementarzellen $E_K$ aus der allgemeinen Objekttabelle ermittelt. Alle weiteren K-Elementarzellen $E_{K1}$... $E_{K3}$ werden dann aus der Differenz-Objekttabelle ermittelt.

Bei der Transformation eines aktuellen Objekts in den Konfigurationsraum erhalten alle K-Elementarzellen $E_K$ die Priorität des korrespondierenden Objektes. Soll ein Objekt aus der Objekttabelle gelöscht werden, beispielsweise weil es den Arbeitsraum des Roboters oder seinen Ort im Arbeitsraum verändert, so werden alle K-Elementarzellen, die die gleiche Priorität aufweisen aus der allgemeinen Objekttabelle gelöscht und anschließend alle noch vorhandenen Objekte mit der gleichen oder einer geringeren Priorität wieder in den Konfigurationsraum transformiert.

Wird eine K-Elementarzelle aufgrund mehrerer Objekte als belegt markiert, so erhält sie die Priorität desjenigen Objektes mit der höchsten Priorität.

Der Vorteil der Prioritätsvergabe besteht darin, das beim häufig stattfindenden Löschen von Objekten mit niedriger Priorität, also hohem Mobilitätsgrad, nur relativ wenig Rechenzeit benötigt wird.

**Patentansprüche**

1. Robotersteuerungsverfahren zur Kollisionsvermeidung zwischen einem aufgabenorientiert programmierten Roboter und Objekten mit unterschiedlichem Mobilitätsgrad mit folgenden Merkmalen:

a) Im Arbeitsraum des Roboters werden Objektbereiche (OB1... OB4), die vom Roboter aufgrund von möglichen Objekten (O1 ...O4) im Arbeitsraum nicht erreichbar sind, bestimmt,

b) jedem Objekt (O1...O4) wird eine Priorität (P1...P4) zugeordnet, die seinem Mobilitätsgrad entspricht,

c) jedem Objektbereich (OB1...OB4) wird die Priorität (P1... P4) des Objektes (O1...O4) zugeordnet, aufgrund dessen er ermittelt wurde,

d) die Objektbereiche (OB1...OB4) werden prioritätsbezogen in einer Objekttabelle gespeichert,

e) wenn sich ein Objekt (O1...O4) im Arbeitsraum des Roboters von seinem Ort entfernt, werden alle Objektbereiche (OB1 ...OB4), die die gleiche oder eine geringere Priorität (P1 ...P4) als das Objekt (O1...O4) aufweisen, aus der Objekttabelle gelöscht, worauf

f) alle verbleibenden Objekte (O1...O4) mit gleicher oder geringerer Priorität (P1...P4) wieder neu in der Objekttabelle gespeichert werden.

2. Verfahren nach Anspruch 1, **dadurch gekennzeichnet,** daß der Schnittmenge von sich überschneidenden Objektbereichen (OB1...OB4) die Priorität (P1...P4) zugeordnet wird, die dem geringsten Mobilitätsgrad des Objektes entspricht, aus dem die Schnittmenge des Objektbereichs (OB1 ...OB4) resultierte.

3. Verfahren nach einem der vorstehenden Ansprüche, **dadurch gekennzeichnet,** daß Objekte (O1 O4) mit zumindest ähnlichem Mobilitätsgrad gruppiert werden, wobei jeweils einer Gruppe von Objekten (O1...O4) eine Priorität (P1...P4) zugeordnet wird.

4. Verfahren nach einem der vorstehenden Ansprüche, **dadurch gekennzeichnet,** daß die Objektbereiche (OB1...OB4) die zu aktuellen Objekten (O1...O4) im Arbeitsraum des Roboters korrespondieren in einer aktuellen Objekttabelle prioritätsbezogen gespeichert werden.

5. Robotersteuerungsverfahren zur Kollisionsvermeidung zwischen einem Roboter und Objekten mit unterschiedlichem Mobilitätsgrad mit folgenden Merkmalen:

a) Der Arbeitsraum (A) eines Roboters wird bezüglich eines beliebigen Koordinatensystems (r,phi,z) in A-Elementarzellen ($E_A$) unterteilt,

b) alle A-Elementarzellen ($E_A$) die vom Roboter durch mindestens eine Gelenkkonfiguration ($G_i$) erreichbar sind, bilden als K-Elementarzellen ($E_K$) den Konfigurationsraum (K) des Roboters,

c) unter der Annahme, daß eine jeweilige A-Elementarzelle ($E_A$) ein elementares Objekt für den Roboter darstellt, werden diejenigen K-Elementarzellen ($E_K$), die bedingt durch das elementare Objekt vom Roboter nicht erreichbar sind, in einer allgemeinen Objekttabelle gespeichert,

d) am Einsatzort des Roboters werden alle aktuellen Objekte im Arbeitsraum des Roboters durch A-Elementarzellen ($E_A$) beschrieben und die dazugehörigen K-Elementarzellen ($E_K$) aus der allgemeinen Objekttabelle ermittelt und in einer aktuellen Objekttabelle als aktuelle K-Elementarzellen ($E_{Ka}$) gespeichert,

e) jedem aktuellen Objekt wird eine Priorität (P1...P4) zugeordnet, die seinem Mobilitätsgrad entspricht,

f) jede aktuelle K-Elementarzelle ($E_{Ka}$) erhält die Priorität (P1...P4) des Objekts, aus dem sie ermittelt wurde,

g) immer wenn sich ein aktuelles Objekt von seinem Ort entfernt, werden alle aktuellen K-Elementarzellen ($E_{KA}$), die die gleiche oder eine geringere Priorität (P1...P4) aufweisen, aus der aktuellen Objekttabelle gelöscht,

h) alle verbleibenden Objekte mit gleicher oder geringerer Priorität (P1...P4) werden nach den Schritten d) und e) wieder in der aktuellen Objekttabelle gespeichert.

6. Verfahren nach Anspruch 5, **dadurch gekennzeichnet,** daß eine gleiche aktuelle K-Elementarzelle ($E_{Ka}$), die aus mindestens zwei aktuellen Objekten unterschiedlicher Priorität (P1...P4) ermittelt wurde, die Priorität (P1...P4) des aktuellen Objektes mit dem geringsten Mobilitätsgrad erhält.

7. Verfahren nach Anspruch 5 oder 6, **dadurch gekennzeichnet,** daß die aktuellen Objekte mit zumindest ähnlichem Mobilitätsgrad gruppiert werden, wobei einer jeweiligen Gruppe von aktuellen Objekten eine Priorität (P1 ...P4) zugeordnet wird.

8. Verfahren nach einem der Ansprüche 5, 6 oder 7, **dadurch gekennzeichnet,** daß ein zu einem jeweiligen Robotertyp passendes Koordinatensystem so gewählt wird, daß unter Ausnutzung von Symmetrieeigenschaften des Koordinatensystems die K-Elementarzellen ($E_K$) zu K-Elementarzellenbereichen ($E_{KB}$,$E_{KF}$) zusammenfaßbar sind.

FIG 1

FIG 2

FIG 3

FIG 4

FIG 5

FIG 7

FIG 6

FIG 8

FIG 9

FIG 10

FIG 11

FIG 12

FIG 13

FIG 14

FIG 15

FIG 16

FIG 17

Europäisches
Patentamt

**EUROPÄISCHER RECHERCHENBERICHT**

Nummer der Anmeldung

EP    90 10 1918

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | ICCON Conference<br>April 1989, NEW YORK ,USA<br>Seiten 1 - 6; P. Adolphs et al.:<br>"Transformation of obstacles into configuration space by using a special look-up-table for collision-free on-line path-planning"<br>* das ganze Dokument *<br>--- | 1, 4, 5, 8 | G05B19/405 |
| A | EP-A-153556 (DR. JOHANNES HEIDENHEIM)<br>* Seite 4, Zeile 20 - Seite 7, Zeile 12 *<br>* Figuren 1a-1d, 2a-2d *<br>----- | 1, 2, 5 | |
| | | | **RECHERCHIERTE SACHGEBIETE (Int. Cl.5 )**<br><br>G05B<br>B25J |

Der vorliegende Recherchenbericht wurde für alle Patentansprüche erstellt

| Recherchenort | Abschlußdatum der Recherche | Prüfer |
|---|---|---|
| DEN HAAG | 26 SEPTEMBER 1990 | NETTESHEIM J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.................................................................
& : Mitglied der gleichen Patentfamilie, übereinstimmendes Dokument

EPO FORM 1503 03.82 (P0403)